(19) Europäisches Patentamt
European Patent Office
Office européen des brevets

(11) **EP 1 981 175 A1**

(12) **EUROPEAN PATENT APPLICATION**

(43) Date of publication:
**15.10.2008 Bulletin 2008/42**

(51) Int Cl.:
***H04B 3/54*** *(2006.01)*

(21) Application number: **08154446.2**

(22) Date of filing: **11.04.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **11.04.2007 US 911013 P**
**25.06.2007 US 946060 P**
**13.09.2007 EP 07116365**

(71) Applicants:
• **Interuniversitair Microelektronica Centrum (IMEC)**
**3001 Leuven (BE)**
• **Universiteit Gent**
**9000 Gent (BE)**

(72) Inventors:
• **Bauwelinck, Johan**
**B-9140, TEMSE (BE)**
• **De Backer, Els**
**B-9260, SCHELLEBELLE (BE)**
• **Melange, Cedric**
**B-8500, KORTRIJK (BE)**
• **Vandewege, Jan**
**B-9030, MARIAKERKE (BE)**

(74) Representative: **pronovem**
**Office Van Malderen**
**Avenue Josse Goffin 158**
**1082 Bruxelles (BE)**

(54) **Communication system over a power line distribution network**

(57) The present invention is related to a power line communication (PLC) system for receiving a PLC signal. The system comprises a frequency conversion means (32) for converting the received PLC signal to a signal at an intermediate frequency and low-pass filtering means (2) for filtering said signal at said intermediate frequency. In particular, the received PLC signal is a frequency-division multiplexed (FDM) signal. The PLC system further comprises an analogue-to-digital converter (4) for converting the filtered signal.

Fig.3

**Description**

**Field of the invention**

The present invention relates to the field of communication systems. More in particular, the present invention relates to systems for broadband communication over a power line distribution network.

**State of the art**

Power line communication (PLC) systems are becoming more and more widespread. Many different systems and standards are developed. As more and more systems get deployed and nearly all solutions use the same spectrum, co-existence becomes increasingly important. Today most line communication systems use TDMA, in which the available bandwidth is allocated to a single user in a certain timeslot, e.g. Homeplug 1.0. However, undoubtedly, Frequency Division Multiplexing (FDM) is the most straightforward way to achieve co-existence between different systems and even Homeplug AV (the next generation of technology from the Homeplug Power Line Alliance) includes the possibility to use FDM for co-existence. Different communication channels are allocated to different frequency bands, the bandwidth of which depends on the service requirements. In order to achieve high data rates, through a higher number of channels, the system bandwidth is specified up to 60 MHz (or higher) so that emerging multimedia services such as Internet Protocol TV (IPTV), High Definition TV (HDTV), etc... can be supported.

FDM is often criticized because it would require more complex front-ends to address the near/far problem that would affect the dynamic range. On the one hand, FDM is the most straightforward way to achieve co-existence between different PLC systems. On the other hand, FDM always poses significant design challenges in the Analogue Front-End (AFE), specifically on the receiver (RX) part of the AFE. This is especially true because it captures the complete used spectrum and the properties of the received signal spectrum depend on many (poorly known) factors. For this reason, conventional AFE architectures designed for TDMA schemes are not really suited to support FDM, while FDM is required to support co-existence. Consequently, AD conversion of the entire band is not a robust solution in an FDM system.

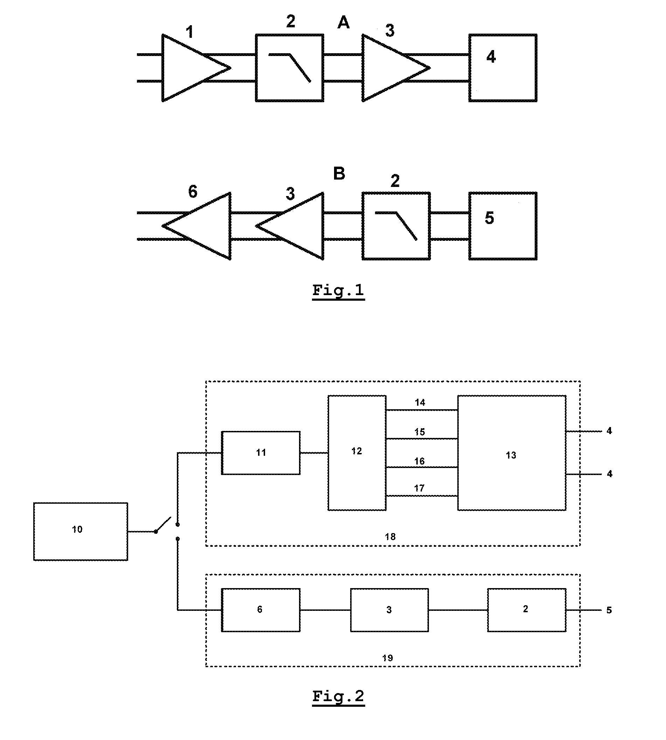

Fig.1 schematically depicts an AFE of conventional PLC transceivers. Fig. 1A represents the receiver path and Fig.1B the transmitter path. These transceivers employ a straightforward architecture in the RX path mainly consisting of a low-noise amplifier (LNA) (1), a low-pass filter (LPF) (2), a variable gain amplifier (VGA) (3) and a high speed analogue-to-digital converter (ADC) (4) for digitizing the complete frequency band as shown in Fig.1. The TX path comprises a digital-to-analogue converter (DAC) (5), a low-pass filter (2), a variable gain amplifier (3) and a line driver (6). This is a suitable architecture for TDMA based communication. However, in a FDM system the spectrum is shared by a number of users resulting in simultaneous communication channels, each having different properties. As a consequence, taking into account the powerline uncertainties (such as loss and interference) and a FDM scheme (different transmit levels and near/far transceivers), the requirements on AD converters are huge if a minimum SNR is required in bad conditions, especially for the next generation PLC systems up to 100 MHz (as considered in the IEEE P1901 working group).

Solutions are developed in the prior art for particular FDM PLC systems without digitizing the full frequency band. These FDM front end solutions can be split into two groups.

The first group carries out a frequency conversion to a high intermediate frequency (IF) followed by band-pass filters and subsampling. An example can be found in WO 2004/091113, presenting a system and method for data communication over a power line. The upconversion is carried out in the receiver path where the received signal is filtered by off-chip, fixed, expensive band-pass filters. Subsampling of the signal is done at a high intermediate frequency, which is sensitive to clock jitter. The system requires band-pass filters at high IF (order of 100 MHz). At higher frequencies, the required quality factor (i.e., the ratio of the centre frequency to the bandwidth of the filter) is higher in order to achieve the same amount of channel filtering, which makes the band-pass filters less effective at higher frequencies due to technological limitations. Furthermore, band-pass filters at high IF (order 100 MHz) cannot be integrated on chip with good noise and linearity performance, which is important from a cost point of view.

The other group uses simple fixed band-pass filters followed by subsampling and Analogue-to-Digital conversion, without applying a frequency conversion (e.g., patent application US2002/186715). The fixed band-pass filters provide very little flexibility for the channel allocations. This is a disadvantage because the channel characteristics are unknown and changing with time. Moreover, co-existence with other systems requires flexibility to allocate the channels because other systems could use different channels widths or different centre frequencies. Band-pass filters cannot be integrated as good as low-pass filters (filter order, noise, distortion, complexity, power consumption etc.).

Prior art power line AFEs, which require supporting FDM, are not optimized for best performance (higher Signal to Noise and Distortion (SINAD), dynamic range, robustness against interferers) and ASIC integration.

## Aims of the invention

The present invention aims to provide a system for processing an incoming broadband power line signal. The signal can be filtered and amplified with a maximum SINAD and dynamic range, even in the presence of interferers. It is also an aim to provide a system that can be integrated on chip without performance penalty.

## Summary of the invention

The present invention relates to a communication system over a power line communication network. The power line communication system is arranged for receiving a power line communication signal. The power line communication system comprises a frequency conversion means for converting the received signal to a signal at an intermediate frequency and low-pass filtering means for filtering the signal at the intermediate frequency. Typically, problems of noise and interference are solved at the receiver side. After mixing to baseband, the filtering takes place at a low frequency. Therefore, this block can be optimized to a higher linearity due to the feedback operation, compared to circuits operating at a high intermediate frequency. Another advantage of using a zero-IF or low-IF architecture is that the magnitude of the image frequencies is approximately known because these are in the same frequency channel. The low-pass filtering means is fully integrated for low cost and is tuneable, providing a flexible way to allocate certain amount of bandwidth to specific users or services. Low-pass filters require a low Q factor. In the prior art solutions bandpass filters with a high Q factor are used in the receiver.

In an embodiment the received power line communication signal is a frequency-division multiplexed signal. The incoming broadband power line signal is processed into a signal which comprises the frequency channel of interest such that it can be filtered and amplified with a maximum SINAD (Signal to Noise And Distortion) and dynamic range, even in the presence of interferers.

In an embodiment the power line communication system further comprises an analogue-to-digital (AD) converter for converting the filtered signal. The analogue-to-digital conversion is performed in baseband, minimizing the AD clock frequency which also relaxes the specifications on AD clock jitter. FDM is required to support co-existence. The problem of AD conversion of the entire band (traditionally done for FDM signals) giving a non-robust solution, is overcome. Further, an image reject filter is not needed because an image mixer is used (partly implemented in the digital domain).

In an embodiment the power line communication system further comprises a selecting means for distributing the received power line communication signal over a plurality of frequency bands. Such preselect distribution provides significant rejection of interfering signals in other frequency bands such that intermodulation distortion caused by non-linearities is substantially reduced. Robustness against interferers or blockers is one of the main advantages of the invention, because signals in other frequency bands are filtered in an early stage in the analogue front-end (AFE), thus reducing intermodulation distortion between the strong interferer and the channel of interest. In a preferred embodiment the selecting means is a crossover filter.

In an embodiment the power line communication system further comprises at least one low-noise amplifier amplifying the received power line communication signal. Again, amplification takes place at a low frequency. Therefore, this block can also be optimized to a higher linearity. Further, the at least one low-noise amplifier is arranged for being switched to each of said frequency bands. The system can quite easily be upgraded for power line systems exploiting higher bandwidth (e.g. 100 MHz). It only requires an update of the LNA and the frequency conversion means.

In an embodiment the power line communication system further comprises at least one variable gain amplifier for optimizing the level of the power line communication signal. The system may further comprise a high pass filter for pre-filtering said power line communication signal. This filter may be present to remove strong unwanted signals at low-frequency caused by AM radio, for example.

In an embodiment the at least one low-noise power of the power line communication system is connected in parallel by an attenuator. The LNA is usually the first active stage of the receiver front-end. At the input of the receiver the incoming signal is divided in a number of frequency bands. As a consequence, the variable gain amplifier has to switch between the different frequency channels depending on the frequency range of interest. Besides providing gain and low noise figure, the LNA should also present a good linearity and input impedance matching. In the case the input spectrum contains strong interferers, it is even desired to attenuate the input signal until the interferers are sufficiently filtered in the IF filter to avoid excessive intermodulation distortion. For this purpose the LNA can be bypassed by an attenuator.

In an embodiment the attenuator comprises a ladder network with a multiple of attenuation sections. Other topologies known to the person skilled in the art are also possible. However, it is important to avoid switches at the input.

In another embodiment the low-noise amplifier comprises a multiple of gain stages whereby the amplifier sections that are not used, should be bypassed in order to reduce noise and intermodulation distortion inherent when adding a next stage.

In an embodiment the low-pass filtering means is a Gm-C filter. Gm-C filters typically provide lower noise and lower power in a given process than switched-capacitor filters. Further, the system comprises a calibration circuit for adapting the cut-off frequency of the Gm-C filter. In an embodiment the calibration circuit is a stabilization loop comprising a variable gain amplifier, whereby the stabilization loop is arranged for updating filter parameters due to non-idealities.

In an embodiment the power line communication system is fully integrated on chip without performance penalty. This reduces the cost due to the high level of integration.

## Short description of the drawings

Fig. 1 represents a conventional analogue front end architecture.
Fig. 2 represents the proposed analogue front end.
Fig. 3 represents the proposed RX architecture.
Fig. 4 represents schematically an example of a crossover filter.
Fig. 5 represents a specific LNA architecture.
Fig. 6 represents a possible embodiment of an attenuator.
Fig. 7 represents schematically a 3-stage low noise variable gain amplifier.
Fig. 8 represents a switched capacitor frequency stabilization loop.

## Detailed description of the invention

The present invention is described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

The invention relates to a transceiver device for broadband communication over a power line distribution network. This network comprises medium voltage (4 to 40 kV) links, the area between the low-voltage (220V) transformer station and the house connection and/or the electricity distribution in the house. More specifically, the transceiver according to the present invention is part of a power line system based on Frequency Division Multiplexing (FDM). FDM is the most straightforward way to achieve co-existence between different PLC systems and to achieve robustness against interferers received by the power line cabling.

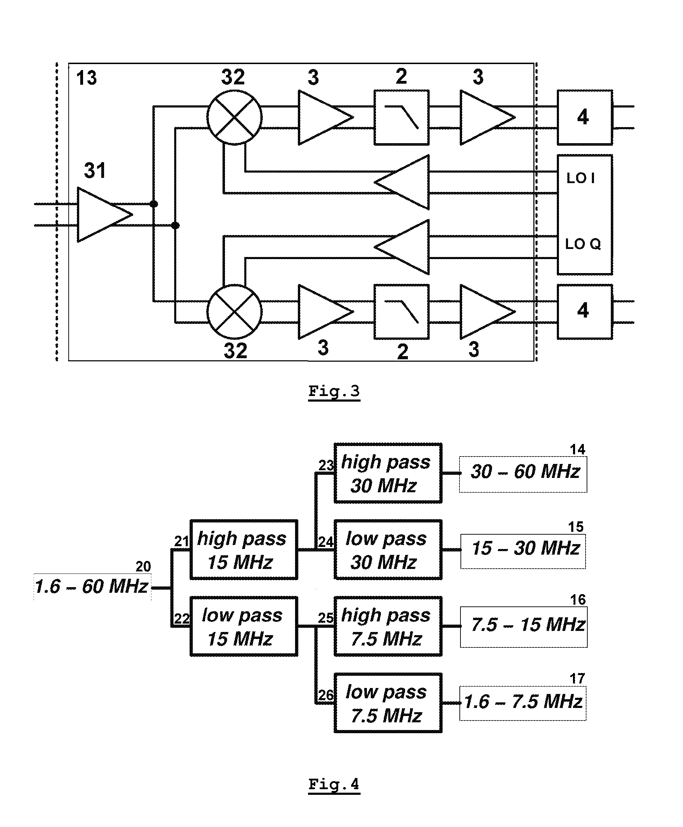

Fig.2 shows a hybrid solution of a transceiver comprising a coupler (10), a receiver (18) and a transmitter (19). The transmitter block (19) has the same architecture as a conventional design; it comprises a DAC (5), a LPF (2), a VGA (3) and a line driver (6). The receiver block (18) comprises the following components (see Fig.2): a high pass filter (11), a preselect crossover filter (12), an analogue front-end receiver block (13) and an AD converter (4). The analogue front-end receiver block (13) comprises a low-noise amplifier (31) (or attenuation) and a mixer. The mixer (32) performs frequency conversion to zero-IF or low-IF (e.g. to a frequency corresponding to ¼ of the spacing between the carriers the FDM scheme) and channel filtering. This block may further comprise at least one variable gain amplifier (3) and at least one low noise amplifier. A preferred embodiment of the analogue front-end receiver block (13) is shown in Fig.3. A high pass filter (11) (HPF, e.g. at 1.6 or 2 MHz depending on the standard) is placed at the input to remove the strong unwanted signals at low-frequency caused by e.g. AM radio, switchers .... A preselect crossover filter (12) is selected to divide the spectrum above 1.6 or 2 MHz in a number (e.g. 4) of frequency bands. Fig.4 shows such an example of a crossover filter. In a first stage the frequency band from 1.6 to 60 MHz (20) is split by a high pass filter at 15 MHz (21) and a low pass filter at 15 MHz (22). In a second stage, the high and the low frequency bands are split again into two bands: by a high pass filter at 30 MHz (23) and a low pass filter at 30 MHz (24) and by a high pass filter at 7.5 MHz (25) and a low pass filter at 7.5 MHz (26). This results in four frequency bands: 30-60 MHz (14), 15-30 MHz (15), 7.5-15 MHz (16) and 1.6-7.5 MHz (17). These preselect frequency bands (14, 15, 16, 17) contain one or more FDM channels. The preselect filtering reduces intermodulation distortion caused by strong interferers or other communication channels because the unwanted signals are (partly) attenuated before the LNA (31). The LNA (31) can be switched to every preselect frequency band.

The system can also be implemented in other ways e.g. the HPF could be part of the coupler. The crossover filter can be active or passive, can be omitted or included in the RX architecture as well. The preselect filter could also include notch filters. However, it is important that the preselect crossover filter is more linear than the RX architecture, otherwise it does not improve the performance.

Whereas in the prior art band-pass filters are used in the AFE transceivers in power line systems for channel filtering in the receive path, the present invention proposes applying a "zero-IF" or a "low-IF" RX architecture. Such architectures use down-conversion so that low-pass filters can be used.

In an embodiment the LPF and the VGA of the transmitter and the RX-architecture of the receiver are integrated in an ASIC. Usually, the HPF and the preselect filter are implemented as discrete components. However, these discrete designs can also be added to the ASIC, as well the ADCs and the DACs, resulting in a fully integrated system on a chip.

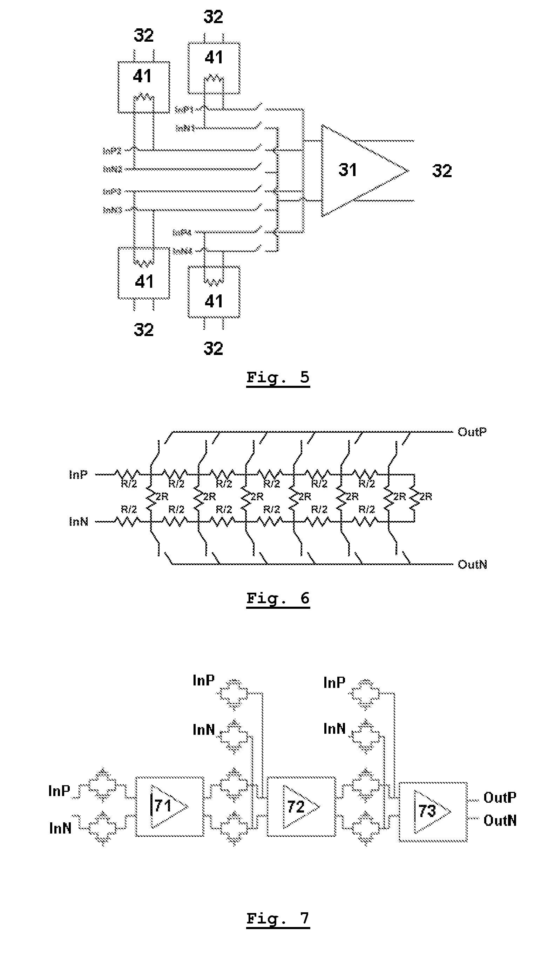

In a preferred embodiment of the RX architecture a number of features are provided for optimizing the low noise amplifier (31) specifically for this architecture and for achieving a maximum dynamic range (about 100dB for 2MHz channels). The low noise amplifier (31) is usually the first active stage of the receiver front-end (18). At the receiver input a preselect filter (12) is provided to divide the frequency range in a number (e.g. 4) frequency bands (14, 15, 16, 17). As a consequence, the LNA (31) has to switch between the various frequency channels depending on the frequency range of interest. One could use a dedicated LNA or a complete architecture for every frequency band, however, a solution only using a single LNA consumes less chip area. Besides providing gain and low noise figure, the LNA should also present a good linearity and input impedance matching. In case the input spectrum contains strong interferers, it is even desirable to attenuate the input signal until the interferers are sufficiently filtered in the IF filter in order to avoid excessive intermodulation distortion. For this purpose the LNA can be bypassed by an attenuator. The LNA architecture is shown in Fig.5. The input for every frequency channel is bypassed by an attenuator (41).

As the attenuator should handle the strongest input signals, the position of the switches is very critical for the linearity because switches are active elements and consequently non-linear. For this reason a dedicated attenuator is used for every preselect frequency band (so that no switching is required), each in parallel with the LNA, avoiding switches at the input of the attenuator. In this configuration the attenuators also act as termination resistors for the preselect filter (or transmission lines). The outputs of the four attenuators are connected to the mixers (32) via switches. At the output of an attenuator the signal level is significantly lower (compared to the input level), so that the impact of these switches is also much lower. Switches at the input of the LNA (having a very high input impedance) are also less critical so the architecture has only one LNA that can be switched to the four preselect channels. Moreover, putting several LNAs would consume more chip area. The output of the LNA is also connected to the mixer via switches.

In an embodiment the attenuator comprises a ladder network with e.g. 6 sections, as shown in Fig.6. Each section has an attenuation of 6dB, so that the attenuation can be set from -6 to -36 dB. The differential input impedance of the attenuator is R. Other topologies are possible as well. However, it is important to avoid switches at the inputs (InP, InN).

The attenuator extends the dynamic range towards very strong input signals as illustrated by the following simulation result. Two tones of 2.5Vpp (12dBm, so 5Vpp in total or 18dBm) and an attenuation setting of 18dB yields a 3$^{rd}$ order intermodulation distortion (IM3) of - 80.6dBc typical, showing that the 1 dB compression point is even much higher than 18dBm.

In an embodiment the LNA consists of 3 gain stages (71, 72, 73) as shown in Fig.7. Since every stage adds noise and intermodulation distortion, the unused amplifier sections should be bypassed (instead of setting the gain to 0 dB). Each stage has a variable gain up to 12dB in steps of about 1dB, so that the maximum gain is about 35dB. A multi-stage design is preferred because a single amplifier with the same gain range and gain step size, is more complex, which is disadvantageous for the stability of feedback loops, especially in broadband amplifiers.

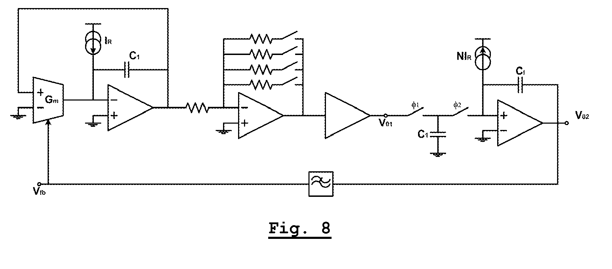

In another embodiment the IF filter is a Gm-C filter that is tuneable over one decade. This also involves modifications to the circuit as known in the prior art, especially in the frequency stabilization loop. Gm-C filters are constructed by replacing the inductor in an LC filter with a capacitor and a gyrator made with a transconductance amplifier. Typically Gm-C filters provide in a given process lower noise and lower power than switched-capacitor filters, but a disadvantage is their need for some sort of calibration circuitry. Calibration is required because their filter coefficients are determined by the product of two dissimilar elements, such as capacitor and resistor (or transconductance) values. In the case of a Gm-C filter, the corner frequency is proportional to the ratio of the transconductance Gm to the integrating capacitance C. The accuracy of the corner frequency is initially about 30%, but a control loop can reduce this number significantly. Usually the transconductance is used as the tuning parameter to change the corner frequency. The frequency controller design is based on a charge balance principle, as known from the paper *'A 10.7-MHz 68-dB SMR CMOS Continuous-Time Filter with On-Chip Automatic Tuning'* (J. Silva-Martinez et al., IEEE Journal of Solid-State Circuits, Dec.1992, vol.27, no.12). However, the embodiment is more accurate than prior art solutions due to the addition of a feedback variable gain amplifier. Fig.8, which is part of (2) in Fig.3, shows the single ended version of the controller for clarity, but the implementation can be differential as well.

Ideally, the charge on the integrating capacitor $C_I$ in this controller is described by the following charge conservation equation:

$$C_I V_{02}(t) = (t - t_0) N I_R - \left( C_1 V_{C1}(t_0) \right)_{\varphi 2} + C_I V_{02}(t_0)$$

whereby $V_{02}(t_0)$ denotes the initial opamp output voltage. The first term of this expression corresponds to the extracted charge by the current source $N I_R$. The second term is the injected charge, during the second phase $\varphi 2$ of the reference clock, from the capacitor $C_1$ into $C_I$. If the time constants are sufficiently large to charge and discharge $C_1$, the total injected charge $C_1 V_{C1}(t_0)$ equals $C_1 V_{01}(t_0)$. The voltage $V_{01}$ is determined by the DC current source $I_R$ and the transcon-

ductance $G_m$ as $V_{01} = I_R/G_m$. The transconductance is adjusted by the control voltage $V_{fb}$. In a steady state condition the injected charge equals the extracted charge in every clock period. The loop steady-state condition can be expressed as

$$\frac{G_m}{C_1} = \frac{f_{clock}}{N}$$

The bandwidth of a Gm-C filter is proportional to the ratio of the transconductance over the capacitance. So by keeping Gm over $C_1$ constant, this feedback loop can stabilize the 3dB corner frequency of the IF filter. The frequency stabilisation loop also corrects the desired 3dB corner frequency for non-idealities when the bandwidth setting is changed e.g. between 1, 2, 4 or 8MHz. Prior art solutions do not have a correction scheme, so that the solution of the invention is more accurate because the Gm-C filter bandwidth is not perfectly proportional to Gm/C and at higher frequencies (close to the corner frequency) the performance of the transconductors Gm degrades. The correction is done by changing the feedback amplifier gain in Fig.8. The amplifier amplifies the output of the integrator (consisting of Gm and $C_1$) with a small correction factor so that the amplifier output is equivalent to an integrator having the correct Gm. The feedback amplifier is followed by a buffer to drive the switches. In the low-pass filter itself the bandwidth is changed by switching the capacitors instead of the transconductors (which are controlled by the $V_{fb}$ voltage shown in Fig.8), as that yields better noise performance.

As input clock frequency the same clock of the ADCs following the AFE is used. With this reference choice any clock feedthrough is aliased to DC after the digital to analogue conversion. At DC there is no useful information anyway due to the offset compensation. Two possible clock frequencies are supported: 32 MHz to be able to sample the 8 MHz bandwidth and 16 MHz for the other filter bandwidths (1, 2, and 4 MHZ). To minimize possible risks with the frequency tuning, it is possible to bypass the automatic control loop and tune the filter with an external tuning voltage.

**Claims**

1. A power line communication system for receiving a power line communication signal comprising a frequency conversion means (32) for converting the received power line communication signal to a signal at an intermediate frequency and low-pass filtering means (2) for filtering said signal at said intermediate frequency.

2. A power line communication system as in claim 1, wherein said received power line communication signal is a frequency-division multiplexed signal.

3. A power line communication system as in claims 1 or 2, further comprising an analogue-to-digital converter (4) for converting said filtered signal at said intermediate frequency.

4. A power line communication system as in any of claims 1 to 3, further comprising a selecting means (12) for distributing said received power line communication signal over a plurality of frequency bands.

5. A power line communication system as in claim 4 wherein said selecting means (12) is a crossover filter.

6. A power line communication system as in any of the previous claims, further comprising at least one low-noise amplifier (31) for amplifying said received power line communication signal.

7. A power line communication system as in claim 6 wherein said at least one low-noise amplifier (31) is arranged for being switched to each of said frequency bands.

8. A power line communication system as in any of the previous claims, further comprising at least one Variable Gain Amplifier (3) for optimizing the level of said power line communication signal.

9. A power line communication system as in any of the previous claims, further comprising a high pass filter for pre-filtering said power line communication signal.

10. A power line communication system as in claims 7 or 8 wherein said at least one low-noise power (31) is connected in parallel by an attenuator (41).

11. A power line communication system as in claim 10, whereby said attenuator comprises a ladder network with a multiple of attenuation sections.

12. A power line communication system as in claims 6 to 11, whereby said low-noise amplifier comprises a multiple of gain stages.

13. A power line communication system as in any of the previous claims, wherein said low-pass filtering means is a Gm-C filter.

14. A power line communication system as in claim 13, further comprising a calibration circuit for adapting the cut-off frequency of said Gm-C filter.

15. A power line communication system as in claim 14, wherein said calibration circuit is a stabilization loop comprising a variable gain amplifier, said stabilisation loop being arranged for updating filter parameters due to non-idealities.

16. A power line communication system as in any of the previous claims further arranged for transmitting a power line communication signal.

17. A power line communication system as in any of the previous claims, wherein said system is fully integrated on chip.

EP 1 981 175 A1

Fig.1

Fig.2

Fig.3

Fig.4

Fig. 5

Fig. 6

Fig. 7

**Fig. 8**

**European Patent Office**

**EUROPEAN SEARCH REPORT**

Application Number

EP 08 15 4446

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/212481 A1 (ABRAHAM CHARLES [US]) 28 October 2004 (2004-10-28) * paragraphs [0067], [0069], [0070], [0074] - [0076] * ----- | 1-3,6, 8-17 | INV. H04B3/54 |
| A | WO 2004/091113 A (ACN ADVANCED COMM NETWORKS SA [CH]; HORVATH STEPHAN [CH]; JAMIN ANTONY) 21 October 2004 (2004-10-21) * page 2, line 14 - page 4, line 11 * ----- | 1-17 | |

TECHNICAL FIELDS SEARCHED (IPC)

H04B

The present search report has been drawn up for all claims

| Place of search | Date of completion of the search | Examiner |
|---|---|---|
| The Hague | 24 July 2008 | De Iulis, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 15 4446

This annex lists the patent family members relating to the patent documents cited in the above-mentioned European search report.
The members are as contained in the European Patent Office EDP file on
The European Patent Office is in no way liable for these particulars which are merely given for the purpose of information.

24-07-2008

| Patent document cited in search report | | Publication date | Patent family member(s) | | Publication date |
|---|---|---|---|---|---|
| US 2004212481 | A1 | 28-10-2004 | NONE | | |
| WO 2004091113 | A | 21-10-2004 | CA | 2562395 A1 | 21-10-2004 |
| | | | CN | 1799207 A | 05-07-2006 |
| | | | JP | 2006523393 T | 12-10-2006 |
| | | | US | 2006146866 A1 | 06-07-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004091113 A

- US 2002186715 A

**Non-patent literature cited in the description**

- **J. SILVA-MARTINEZ et al.** *IEEE Journal of Solid-State Circuits,* December 1992, vol. 27 (12